# EUROPÄISCHE PATENTANMELDUNG

(11) **EP 3 269 960 A1**
(43) Veröffentlichungstag der Anmeldung: **17.01.2018**
(21) Anmeldenummer: 17173745.5
(22) Anmeldetag: 31.05.2017
(51) Int. Cl.: F02C 6/12, F02C 9/22, F02B 37/24, F01D 17/16

(54) **VERSTELLRING EINER VARIABLEN TURBINENGEOMETRIE**

(30) Priorität: 13.07.2016 DE 202016103778 U
(71) Anmelder: Bosch Mahle Turbo Systems GmbH & Co. KG, 70376 Stuttgart (DE)
(72) Erfinder: JENNES, Jörg, 67278 Bockenheim (DE); JOST, Robert, 70439 Stuttgart (DE); LUMMER, Dirk, 71634 Ludwigsburg (DE); MÜLLER, Jochen, 71634 Ludwigsburg (DE)
(74) Vertreter: BRP Renaud & Partner mbB Rechtsanwälte Patentanwälte Steuerberater

(57) **Zusammenfassung**

Die vorliegende Erfindung betrifft einen Verstellring (1) einer variablen Turbinengeometrie (2) eines Abgasturboladers (3).

Erfindungswesentlich ist dabei, dass der Verstellring (1) zumindest ein erstes Ringsegment (4) und zumindest ein zweites Ringsegment (5) aufweist.

## Beschreibung

Die vorliegende Erfindung betrifft einen Verstellring einer variablen Turbinengeometrie eines Abgasturboladers gemäß dem Oberbegriff des Anspruchs 1. Die Erfindung betrifft außerdem eine variable Turbinengeometrie mit einem solchen Verstellring sowie einen Abgasturbolader mit einer solchen variablen Turbinengeometrie.

Aus der EP 1 688 602 A1 ist ein gattungsgemäßer Verstellring einer variablen Turbinengeometrie eines Abgasturboladers bekannt, der im Kontaktbereich zu einem Leitschaufelhebel eine Einsetzbuchse aufweist, um eine Kontaktfläche zum Anlenkhebel zu vergrößern und dadurch die Verschleißbeständigkeit zu erhöhen.

Aus der DE 10 2012 218 138 A1 ist ein Abgasturbolader mit einer variablen Turbinengeometrie bekannt, wobei die variable Turbinengeometrie in einem Schaufellagerring drehbar gelagerte Leitschaufeln aufweist, die mittels eines Verstellelements verstellbar sind. Das Verstellelement selbst ist dabei als Dünnblechbauteil ausgebildet und weist einen kleineren Durchmesser auf als der Schaufellagerring.

Aus der WO 2009/115437 A1 ist eine Leitgitteranordnung eines Abgasturboladers mit variabler Turbinengeometrie und mit zumindest einem, aus mindestens einem Blechteil gebildeten, Trägerring zur Lagerung von Leitschaufeln bekannt.

Generell wird in einem Abgasturbolader mit variabler Turbinengeometrie zur Verstellung der Leitschaufeln ein Verstellring verwendet, der einerseits mit einem Leitschaufelhebel und andererseits mit den Stellhebeln der einzelnen Leitschaufeln verbunden ist. An den Kontaktstellen zum Leitschaufelhebel und zu den einzelnen Verstellhebeln der Leitschaufeln kann es jedoch aufgrund von Relativbewegungen und großen Kontaktkräften zu einem erhöhten Verschleiß kommen. Um diesen Verschleiß an den Eingriffsstellen des Verstellrings in Grenzen halten zu können, werden oftmals sowohl der Leitschaufelhebel als auch die einzelnen Stellhebel und/oder der Verstellring mit einer Verschleißschutzschicht versehen, bspw. mit einer Nitrierschicht. Um darüber hinaus die Flächenpressung reduzieren zu können, wird oftmals auch die Dicke des Verstellrings insgesamt oder lediglich lokal im Bereich der mit den Stellhebeln bzw. mit dem Leitschaufelhebel in Kontakt stehenden Ausnehmungen erhöht.

Nachteilig bei den aus dem Stand der Technik bekannten gestanzten Verstellringen mit vergleichsweise großer Dicke ist jedoch, dass diese eine hohe Presskraft, besonders bei Bauteilen größer 6 mm, zur Herstellung erfordern sowie ein potentiell höheres Risiko bezüglich einer Maßgenauigkeit aufweisen. Darüber hinaus entsteht bei Stanzteilen bei Bauteildickenzunahme im Millimeterbereich, nur ein anteilig höherer Glattschnittanteil und damit nur eine etwas größere Kontakthöhe im Vergleich zur Gesamtdicke des Verstellrings. Alternativ ist dabei selbstverständlich auch die Herstellung eines solchen Verstellrings als Gussteil denkbar, wobei hier jedoch eine aufwendige und auch kostenintensive Nachbearbeitung erforderlich ist, um die notwendigen Toleranzen zur Erfüllung der Funktion über die Lebensdauer hinweg erzielen zu können.

Die vorliegende Erfindung beschäftigt sich daher mit dem Problem, für einen Verstellring der gattungsgemäßen Art eine verbesserte oder zumindest eine alternative Ausführungsform anzugeben, die insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Verstellring für eine variable Turbinengeometrie eines Abgasturboladers erstmals nicht als monolithisches Massivbauteil auszubilden, sondern aus zumindest zwei einzelnen Ringsegmenten bzw. Ringteilen zusammen zu setzen, was den großen Vorteil bietet, dass die einzelnen Ringsegmente aufgrund ihrer deutlich reduzierten Dicke einfacher, hochwertiger und zudem kostengünstiger hergestellt werden können. Der erfindungsgemäße Verstellring einer variablen Turbinengeometrie eines Abgasturboladers weist somit zumindest ein erstes Ringsegment und zumindest ein zweites Ringsegment auf, welche zusammen den Verstellring bilden. Mit dem erfindungsgemäßen, aus mehreren einzelnen Ringsegmenten zusammengesetzten, Verstellring ist es somit auch möglich, einen vergrößerten Kontaktbereich im Eingriffspunkt eines Leitschaufelhebels in den Verstellring sowie den einzelnen Stellhebeln der Leitschaufeln zum Verstellring zu schaffen und gleichzeitig die dort auftretende Flächenpressung zu reduzieren, wodurch ein geringerer Verschleiß bei insbesondere großen Stellkräften und langen Laufzeiten erzielt werden kann. Durch die geringe Dicke der einzelnen Ringsegmente im Vergleich zur Gesamtdicke des Verstellringpakets, kann der Verstellring bzw. dessen einzelne Ringsegmente, weiterhin als Stanz- oder Feinschneidteil mit geringem Kanteneinzug hergestellt werden, was im Vergleich zu einem massiven dicken Verstellring deutliche Vorteile in der Herstellung bedeutet, nämlich insbesondere eine höhere Maßhaltigkeit, einen höheren Glattschnittanteil sowie eine geringere, erforderliche Pressenkraft. Darüber hinaus lassen sich auch Kostenvorteile gegenüber einem Gussteil mit Fräsbearbeitung erzielen, welche bei diesem erforderlich sind, um die erforderlichen Toleranzen zur Erfüllung der Funktion über die Lebensdauer erzielen zu können.

Bei einer vorteilhaften Weiterbildung der erfindungsgemäßen Lösung sind/ist das erste und/oder das zweite Ringsegment als Blechbauteil ausgebildet. Ein derartiges Blechbauteil lässt sich vergleichsweise einfach, kostengünstig und fertigungstechnisch hochwertig stanzen bzw. ausschneiden, wodurch auch das für die Herstellung des Verstellrings erforderliche Ringsegmentpaket kostengünstig und maß genau herstellbar ist.

Bei einer vorteilhaften Weiterbildung der erfindungsgemäßen Lösung sind das erste und das zweite Ringsegment fest miteinander verbunden. Eine derartige Verbindung kann bspw. über ein Verkleben, Vernieten, Stanznieten, Fügen durch Umformen, Verlöten oder Verschweißen erfolgen. Rein theoretisch ist selbstverständlich alternativ auch eine lose Anordnung der zumindest zwei einzelnen Ringsegmente denkbar, insbesondere ein loses Aufeinanderlegen der einzelnen Ringsegmente, die sich dann bei Übertragung von Kräften entsprechend an den Kontaktflächen zueinander ausrichten. Unabhängig von der Verbindung der einzelnen Ringsegmente miteinander kann somit der Verstellring kostengünstig und darüber hinaus äußerst flexibel, das heißt mit nahezu frei wählbarer Dicke, hergestellt werden, indem einzelne Ringsegmente mit entsprechender Dicke zu einem Verstellringpaket zusammengefasst werden.

Zweckmäßig sind das erste und das zweite Ringsegment als Gleichteile ausgebildet. Dies bietet den großen Vorteil, dass zur Herstellung sowohl des ersten Ringsegments als auch des zweiten Ringsegments lediglich ein Stanzwerkzeug erforderlich ist, wodurch die Herstellung der einzelnen Ringsegmente und damit auch des Verstellrings kostengünstig möglich ist.

Bei einer weiteren vorteilhaften Ausführungsform der erfindungsgemäßen Lösung weisen das erste und/oder das zweite Ringsegment eine Verschleißschutzschicht auf, insbesondere eine Nitrierschicht. Mittels einer derartigen Verschleißschutzschicht kann die Verschleißbeständigkeit deutlich erhöht werden, wobei durch ein Nitrieren, das heißt ein Aufsticken der Oberfläche der einzelnen Ringsegmente eine Oberflächenvergütung bzw. eine Oberflächenhärtung erfolgt, die die Verschleißbeständigkeit erheblich steigert und zugleich kostengünstig realisierbar ist.

Die vorliegende Erfindung beruht weiter auf dem allgemeinen Gedanken, eine variable Turbinengeometrie mit einem zuvor beschriebenen Verstellring anzugeben, sowie einen Abgasturbolader mit einer solchen variablen Turbinengeometrie, wobei selbstverständlich klar ist, dass nicht nur eine variable Turbinengeometrie, sondern auch eine variable Verdichtergeometrie mit einem derartigen erfindungsgemäßen Verstellring ausgestattet sein kann. Ein solcher Abgasturbolader lässt sich somit kostengünstig, qualitativ hochwertig und zudem fertigungstechnisch einfach herstellen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine erfindungsgemäße variable Turbinengeometrie mit einem erfindungsgemäßen Verstellring mit zumindest zwei Ringsegmenten,
- Fig. 2: eine Detaildarstellung aus Fig. 1,
- Fig. 3: eine Schnittdarstellung durch die erfindungsgemäße variable Turbinengeometrie,
- Fig. 4: eine Ansicht auf einen erfindungsgemäßen Verstellring,
- Fig. 5: eine Schnittdarstellung durch einen erfindungsgemäßen Verstellring, bei welchem die beiden Ringsegmente miteinander vernietet sind.

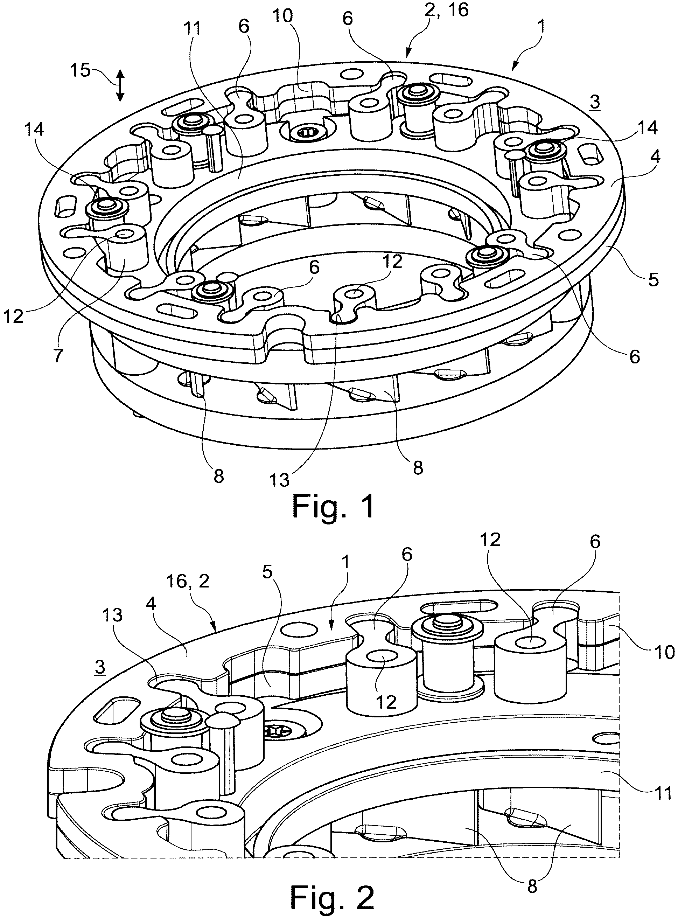

Entsprechend den Fig. 1 bis 5, weist ein erfindungsgemäßer Verstellring 1 einer variablen Turbinengeometrie 2 eines Abgasturboladers 3 zumindest ein erstes Ringsegment 4 und zumindest ein zweites Ringsegment 5 auf. Der eigentliche Verstellring 1 ist somit aus mehreren einzelnen Ringsegmenten 4, 5, hier beispielhaft aus zwei Ringsegmente 4, 5, zusammengesetzt, wodurch es möglich ist, die einzelnen Ringsegmente 4, 5 dünner, fertigungstechnisch einfacher und kostengünstiger herzustellen. Das erste und/oder zweite Ringsegment 4, 5 kann dabei bspw. als einfaches gestanztes Blechteil ausgeführt sein. Hierdurch ist auch ein äußerst flexibler Dickenaufbau des Verstellrings 1 durch Kombination unterschiedlich dicker Ringsegmente 4, 5 möglich.

Im Vergleich zu bisher aus dem Stand der Technik bekannten Verstellringen, bei welchen der Verstellring jeweils als monolithisches, das heißt massives, Bauteil ausgebildet war, können mit dem erfindungsgemäßen Verstellring 1 auch Kontaktflächen im Bereich zu Stellhebeln 6 oder einem Leitschaufelhebel 7 vergrößert und dadurch die dort auftretende Flächenpressung und aufzunehmenden Kräfte verringert werden.

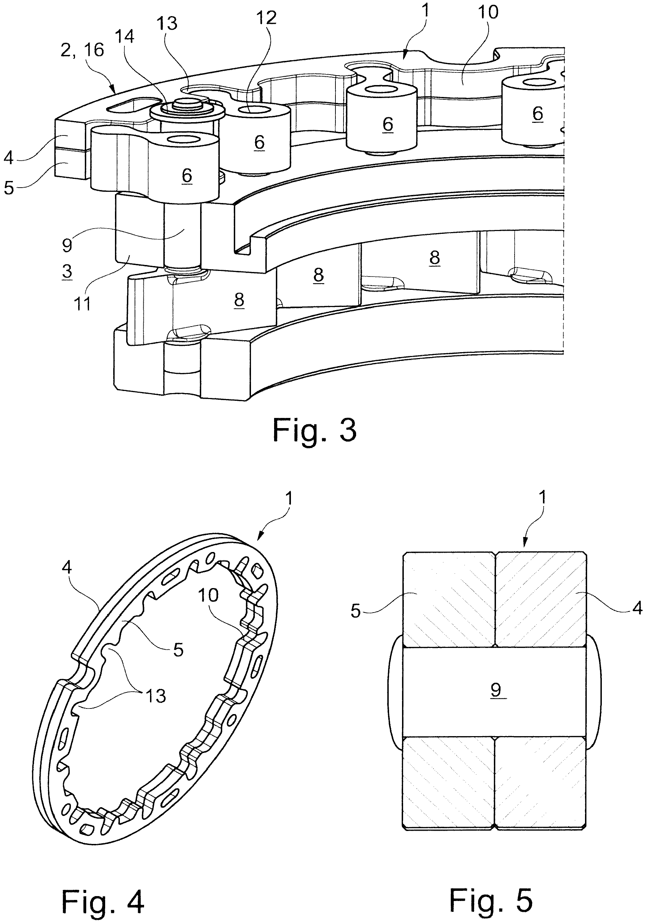

Generell ist dabei denkbar, dass die zumindest zwei Ringsegmente 4, 5 lose aufeinander gelegt sind und sich allein über die Kontaktflächen zum Leitschaufelhebel 7 bzw. zu den einzelnen Stellhebeln 6 der Leitschaufeln 8 ausrichten. Alternativ ist es selbstverständlich auch denkbar, dass die beiden Ringsegmente 4, 5 fest miteinander verbunden sind, bspw. mit einander verklebt, verlötet oder verschweißt werden oder mittels einer Niet 9 (vgl. Fig. 5) miteinander vernietet sind, beispielsweise durch Stanznieten, Fügen durch Umformen, insbesondere Durchsetzfügen. Von besonderem Vorteil ist es darüber hinaus, sofern die zumindest zwei den Verstellring 1 bildenden Ringsegmente 4, 5 als Gleichteile ausgebildet sind, weil in diesem Fall dann lediglich ein einziges Stanzwerkzeug erforderlich ist.

Um die Verschleißbeständigkeit des Verstellrings 1 weiter steigern zu können, kann zudem vorgesehen sein, dass das erste und/oder zweite Ringsegment 4, 5 eine Verschleißschutzschicht 10 aufweist, insbesondere nitriert oder boriert ist. Durch das entsprechende Verfahren werden üblicherweise die Ringsegmente 4, 5 komplett nitriert oder boriert. Durch ein derartiges Oberflächenvergüten bzw. Oberflächenhärten können auch die im Bereich der Kontaktflächen zum Leitschaufelhebel 7 bzw. zu den einzelnen Stellhebeln 6 der Leitschaufeln 8 auftretenden, hohen Stellkräfte über die gesamte Lebensdauer ertragen werden.

Betrachtet man nochmals die variable Turbinengeometrie 2 der Fig. 1 bis 3, so kann man erkennen, dass diese in bekannter Weise einen Schaufellagerring 11 aufweist, in welchem die einzelnen Leitschaufeln 8 über ihre Schaufellagerzapfen 12 drehbar gelagert sind. Dieser Schaufellagerring 11 kann selbstverständlich, wie auch dargestellt, zwei Schaufellagerringe aufweisen. Auf der der Leitschaufel 8 gegenüberliegenden Seite des Schaufellagerrings 11 ist der Schaufellagerzapfen 12 mit dem Stellhebel 6 verbunden, welcher in eine entsprechende Ausnehmung 13 am Verstellring 1 eingreift, so dass die einzelnen Leitschaufeln 8 über den Verstellring 1 gemeinsam verstellbar sind. Gelagert wird der Verstellring 1 bspw. über Rollen 14, welche eine leichtgängige Lagerung erlauben.

Mit dem erfindungsgemäßen Verstellring 1 ist es erstmals möglich, einen bislang zum Erhalt der erforderlichen Verschleißbeständigkeit und zum Erhalt einer genügend großen Kontaktfläche massiv ausgebildeten Verstellring segmentiert auszubilden und dadurch kostengünstiger herzustellen und insbesondere auch flexibler, da für einzelne Verstellringe 1 zur Herstellung unterschiedlicher Dicken in Axialrichtung 15 unterschiedlich viele Ringsegmente 4, 5 miteinander kombiniert werden können. Denkbar ist hierbei auch, dass die einzelnen Ringsegmente 4, 5 jeweils unterschiedliche Dicken aufweisen. Generell ist selbstverständlich auch klar, dass der gemäß den Fig. 1 bis 3 bei einer variablen Turbinengeometrie 2 eingesetzte Verstellringe 1 in gleicher Weise auch bei einer variablen Verdichtergeometrie 16 eingesetzt werden kann. Auch die Kombination von mehr als zwei Ringsegmenten 4, 5 ist dabei selbstverständlich denkbar.

## Patentansprüche

1. Verstellring (1) einer variablen Turbinengeometrie (2) eines Abgasturboladers (3),
**dadurch gekennzeichnet,**
**dass** der Verstellring (1) zumindest ein erstes Ringsegment (4) und zumindest ein zweites Ringsegment (5) aufweist.

2. Verstellring nach Anspruch 1,
**dadurch gekennzeichnet,**
**dass** das erste Ringsegment (4) und/oder das zweite Ringsegment (5) als Blechbauteil ausgebildet ist.

3. Verstellring nach Anspruch 1 oder 2,
**dadurch gekennzeichnet,**
**dass** das erste Ringsegment (4) und/oder das zweite Ringsegment (5) als Stanzteil ausgebildet ist.

4. Verstellring nach einem der vorhergehenden Ansprüche,
**dadurch gekennzeichnet,**
- **dass** das erste Ringsegment (4) und das zweite Ringsegment (5) fest miteinander verbunden sind, oder
- **dass** das erste Ringsegment (4) und das zweite Ringsegment (5) lose aufeinander gelegt sind.

5. Verstellring nach einem der vorhergehenden Ansprüche,
**dadurch gekennzeichnet,**
**dass** das erste Ringsegment (4) und das zweite Ringsegment (5) fest miteinander verklebt, vernietet, verlötet, verschweißt oder über Stanznieten, Fügen durch Umformen, insbesondere Durchsetzfügen, miteinander verbunden sind.

6. Verstellring nach einem der vorhergehenden Ansprüche,
**dadurch gekennzeichnet,**
**dass** das erste und zweite Ringsegment (4,5) als Gleichteile ausgebildet sind.

7. Verstellring nach einem der vorhergehenden Ansprüche,
**dadurch gekennzeichnet,**
**dass** das erste Ringsegment (4) und/oder das zweite Ringsegment (5) eine Verschleißschutzschicht (10) aufweisen, insbesondere nitriert oder boriert sind.

8. Variable Turbinengeometrie (2) mit einem Verstellring (1) nach einem der vorhergehenden Ansprüche.

9. Abgasturbolader (3) mit einer variablen Turbinengeometrie (2) nach Anspruch 8.
